# EUROPEAN PATENT SPECIFICATION

(11) **EP 2 511 678 B1**
(45) Date of publication and mention of the grant of the patent: **23.11.2016**
(21) Application number: 11162039.9
(22) Date of filing: 12.04.2011
(51) Int. Cl.: G01G 19/08, B25J 9/16, E02F 9/24

(54) **Measurement system for a material transfer vehicle**
Messsystem für ein Materialtransportfahrzeug
Système de mesure pour véhicule de transfert de matériel

(43) Date of publication of application: 17.10.2012
(73) Proprietor: TAMTRON OY, 33561 Tampere (FI)
(72) Inventor: Asikainen, Pentti, 33500, Tampere (FI)
(74) Representative: IPR Partners Ltd

(56) References cited:
- US-A1- 2004 020 064
- US-A1- 2009 139 119

## Description

### FIELD OF THE INVENTION

This invention relates generally to a measurement system of a material transfer vehicle. More particularly, the present invention relates to what is disclosed in the preamble of claim 1. The present invention can be applied for weighing a load of the vehicle as well as for other measurement purposes. The material transfer vehicle may be e.g. a wheel loader, a forklift, an excavator, a dumper, a forwarder, a harvester, a crane, a passenger hoist, a timber jack, or a truck such as a fire truck, a forklift truck, a pallet truck, a reach truck, or a garbage truck.

### BACKGROUND OF THE INVENTION

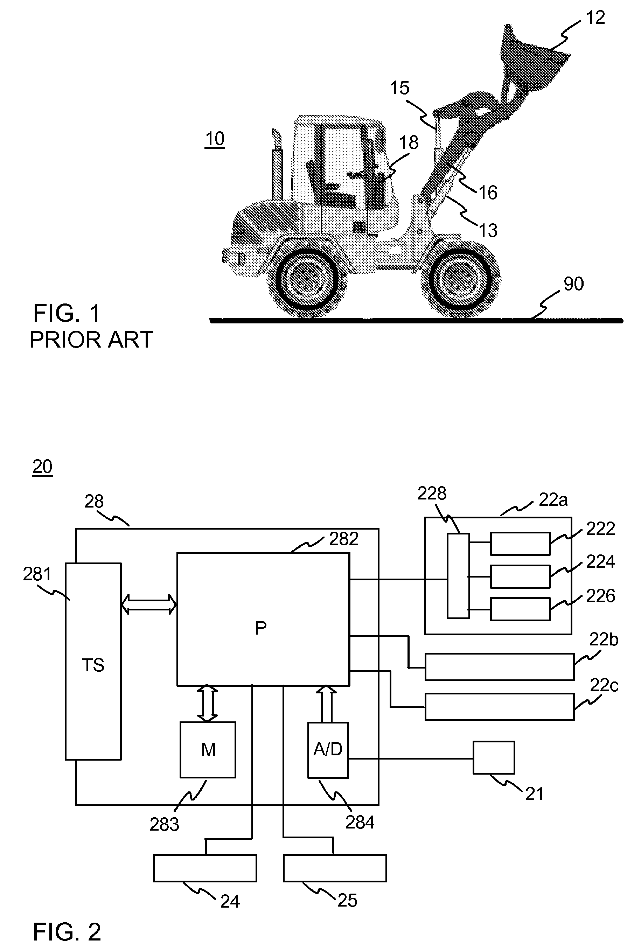

Material transfer vehicles often include a weighing arrangement for weighing material which is handled or carried. Figure 1 illustrates an exemplary material transfer vehicle according to the prior art, a wheel loader 10 located on ground 90. The wheel loader has a bucket 12 as a carrying means for the material to be transferred. The bucket is connected to the body parts / chassis of the wheel loader with an articulated beam 16. In order to lift/lower the bucket, hydraulic cylinders 13 are connected to the beam, and the cylinders are controlled with valves. Additionally, the wheel loader has hydraulic cylinders 15 for turning the bucket.

The purpose of the weighing device of the wheel loader is to measure the weight of the material which is currently placed in the bucket. The weighing arrangement may have electronic or hydraulic weighing sensors in the boom structure. For example, pressure sensors may be installed in the lifting cylinders, which pressure sensors measure the pressure of the hydraulic liquid in the cylinder. Alternatively, strain-gauge transducers can be used as weighing sensors, which can be installed in the beam or in the joint between the bucket and the beam, for example.

However, the position, angle and movement of the chassis, boom or bucket of the material transfer vehicle has an effect on the output signal values of the weighing sensors, and the data of the weighing sensors should therefore be compensated with angle/position/acceleration information. Such a compensation system is disclosed in patent document EP1083415B1. For the compensation purpose a material transfer vehicle may include sensors, such as accelerometers, in the chassis of the material transfer vehicle. An excavator, for example, may also have sensors, such as accelerometers, for measuring the position of a boom for the compensation of the weighing.

The information received from the sensors is processed on the basis of measurement parameters, and a weighing result is achieved as a result of the processing. An electronics unit with user interface 18 of the weighing device is placed in the cabin of a vehicle

Document US2009139119A1 discloses a payload calculation system for a working implement. The system has sensors for measuring centrifugal forces that are generated when the working implement rotates around a vertical pivot. The sensors may include a gyroscope.

Document US2004020064A1 discloses a compass, which combines an electronic magnetic compass with a gyroscope. The gyroscope improves the reliability of the device when the geomagnetic field is distorted.

There are some disadvantages related to the prior art solutions. Accelerometers are based on measuring forces directed to a small mass by using strain gauge transducers, piezoelectric transducers or capacitive, MEMS (micro-electromechanical system) transducers. Such an accelerometer measures acceleration/ movement in a certain direction and it is possible to use three perpendicularly positioned sensors in order to provide a resultant acceleration. However, such an accelerometer is not able to measure turning or rotating of a structure in a sufficiently accurate manner. Especially, if there is simultaneous acceleration of the vehicle and relative turning of a boom it may be difficult to separate the effects of those movements from the signal received from the acceleration sensor of the boom. The accelerometers of the prior art systems also have a relatively slow response. Therefore, in case of rapid movements of the carrying means the accelerometer may provide inaccurate output values. Since an absolute angle/position is achieved on the basis of integrating the accelerometer output, inaccuracy is accumulated during movement of the accelerometer, and the accelerometer circuit needs to be zeroed frequently.

### SUMMARY OF THE INVENTION

The objective of the present invention is to avoid or at least alleviate the aforesaid defects of prior art solutions and to achieve a solution by which accuracy of weighing results is good despite varying positions and movement of vehicle structures.

The objective of the invention is met by a solution, wherein a material transfer vehicle has at least one first sensor unit for measuring weight of the load at the carrying means, and at least one second sensor unit for measuring angular position of the carrying means and/or a boom of the vehicle. According to the invention, the second sensor unit comprises a gyroscope sensor for the measurement of angular position. The load weight is determined on the basis of both first and second sensor units. When a gyroscope is used for measuring the angular position of a carrying means or a boom of the material transfer vehicle it is possible to achieve faster and more accurate response for angular movement, and therefore good measurement accuracy and stability can be achieved.

According to the invention the second sensor unit also comprises an accelerometer in addition to the gyroscope. Such a sensor can be used for providing reference angular position information. The accelerometer can be used for measuring the direction of the gravitational force, i.e. vertical direction. An additional magnetic field sensor can be used for measuring the direction of the magnetic field of the earth. The reference position can preferably be measured when the vehicle and its structures are not moving in order to achieve accurate reference position information. When the vehicle is under movement, the angular movement i.e. relative angular position is measured with the gyroscope sensor of the second sensor unit. The absolute angular position can then be determined on the basis of the reference position and the relative position data. The absolute position data may thus be provided by a second sensor unit including at least a gyroscope and an accelerometer. The sensor unit may also include a sensor controller for receiving sensor signals and for providing digital data to an electronics unit of the measurement system. The gyroscope and accelerometer preferably measure in three orthogonal directions and thus provide 3-dimensional measurement data.

The second sensor unit is installed in the carrying means and/or in one or several booms of the vehicle. In one embodiment the carrying means is attached to a boom, and there are second sensor units installed in each boom and the carrying means. This way, angular positions of the carrying means and each boom are defined. The first sensor unit including weighing sensor can be installed in one or several hydraulic cylinders which move booms or carrying means. The weighing sensor is a pressure sensor when installed in a hydraulic cylinder. A weighing sensor may also be a strain gauge, which may be installed in a boom, and/or in a joint between the cabin/chassis of the vehicle, and/or in a joint between two booms, and/or in a joint between a boom and a carrying means. Based on the weighing sensor output and the angular positions it is possible to calculate a position-compensated weight of the load. The sensors measuring angular position preferably include gyroscopes, but it is possible that in some sensor unit there may be alternatively or additionally mechanical or optical sensors measuring relative position between two joint parts.
According to one embodiment the system comprises at least one third sensor unit, which is installed to a chassis or a cabin of the material transfer means. The third sensor unit preferably comprises an accelerometer and/or a gyroscope and possibly a magnetic field sensor. If the vehicle is an excavator, for example, where the cabin rotates in relation to the chassis, the measurement system may comprise third sensor units installed in both the cabin and the chassis. The third sensor unit(s) can be used for determining the acceleration/movement of the vehicle by an acceleration sensor and/or a gyroscope. An acceleration sensor or a magnetic sensor may also be used to achieve information on the reference horizontal direction. It is also possible to determine the rotating movement of the cabin by a gyroscope, magnetic field sensor or an accelerometer for example. This information received from the third sensor units can be used for acceleration/rotation compensation in the weighing measurement.

The measurement system also has a user interface for controlling the system and for receiving measured data/alarms. The user interface may be included in an electronics unit which also has processing means for processing the sensor data and for controlling the user interface. The electronics unit is preferably installed in the cabin of the material transfer vehicle.

Some further embodiments of the present invention are disclosed in the dependent claims.

It is possible to achieve substantial advantages with the present invention. In the inventive solution, relative angular position is determined with a gyroscope, which can have a fast and accurate response to angular movement. Together with accelerometer and/or a magnetic field sensor it is possible to achieve accurate data on absolute position of vehicle structures. This way the weighing accuracy is good and remains stable during movements of the vehicle, its carrying means, boom and other possible structures. Due to the better stability it is also not necessary to provide frequent zeroing of the measurement system. The present invention can be applied in various types of material transfer vehicles such as listed below.

In this patent application, a "material transfer vehicle" refers to all kinds of vehicles having carrying means for carrying a load and means for transferring the load. The material transfer vehicle may be e.g. a wheel loader, a forklift, an excavator, a dumper, a forwarder, a harvester, a crane, a passenger hoist, a timber jack, or a truck such as a fire truck, a forklift truck, a pallet truck, a reach truck, or a garbage truck.

In this patent application term "horizontal plane" or "horizontal direction" means a plane/direction which is perpendicular to the force of gravitation of the earth. "Vertical direction" means the direction of the force of gravitation of the earth.

### BRIEF DESCRIPTION OF THE DRAWINGS

Next the invention will be described in more detail with reference to the following drawings:
Fig. 1 illustrates a wheel loader with a prior art weighing arrangement;
Fig. 2 illustrates a block diagram of an exemplary measurement system according to one embodiment of the invention;
Fig. 3 illustrates an excavator including an exemplary measurement system according to the invention.

### DETAILED DESCRIPTION OF EMBODIMENTS

Figure 1 was described in the prior art section above.

Figure 2 illustrates a block diagram for a measurement system 20 according to an embodiment of the invention. The system has a sensor unit 21 of a first type for weighing a load of carrying means. The first sensor unit may be a strain gauge transducer or a pressure transducer, for example, whose output signal is proportional to the load weight. A strain gauge transducer can be installed to a boom or an articulating joint between the cabin/chassis and a boom, between two booms and/or between a boom and a carrying means. A pressure sensor is installed in one or several hydraulic cylinder(s) moving the boom/carrying means. In some systems a pressure sensor may measure air pressure from a pneumatic cylinder. The signal from the first sensor unit is led to an electronics unit 28 with wireless data transfer or a cable, and the signal is further amplified and converted into digital form in an analog-to-digital (A/D) converter 284. The digital signal is read by a processor 282, which calculates a weight value of the load. It is also possible that the first sensor unit includes an A/D converter and has a digital interface for the processor 282 of the electronics unit 28.

The measurement system of Figure 2 also has sensor units 22a, 22b, 22c of a second type. These sensors are installed at boom(s) and/or a carrying means. For example, sensor units 22a and 22b may be installed to a first and second boom, respectively, and the sensor unit 22c may be installed on the carrying means. The second sensor unit has a 3-dimensionally measuring gyroscope 222 for measuring relative angular position of the sensor unit / structure of the vehicle. The second sensor unit 22a, 22b, 22c also has a 3-dimensionally measuring accelerometer 224 for measuring acceleration/movement of the boom or carrying means. The second sensor unit 22a, 22b, 22c may further have a 3-dimensionally measuring magnetic field sensor 226. The accelerometer and the magnetic field sensor can be used for determining reference angular position of the sensor unit / structure of the vehicle in relation to the absolute horizontal/vertical direction.

The second sensor unit 22a has a sensor controller 228, which receives the signals from sensors 222, 224, 226. The sensor controller converts the signals into digital form and transfers the data to the processor 282 of the electronics unit. The data is transferred in a serial form, for example. The sensor controller 228 may also have memory for storage of the signal data. It may also include a processor which provides a position data of the sensor by combining the signals from the sensors. Sensor units 22b and 22c are preferably similar to the sensor unit 22a.

The measurement system may also have a further sensor unit measuring relative angle between the cabin and a boom, between carrying means and a boom or between two booms. Such a sensor for measuring relative angle may be based on a mechanical, resistive or optical measurement, for example.

The measurement system has also two sensor units 24, 25 of third type. One of these sensor units 24 may be installed to the cabin of the vehicle, and one of the sensor units 25 may be installed to the chassis of the vehicle. Separate sensors for chassis and cabin may be preferable if chassis and cabin move in relation to each other, such as with an excavator. The third sensor unit preferably has an accelerometer, which can provide information on the absolute horizontal/vertical reference direction as well as movement/acceleration of the whole vehicle. The third sensor unit 24, 25 may also be similar to the second sensor unit 22a, 22b, 22c, and it may include an accelerometer, a gyroscope sensor, a magnetic field sensor and a sensor controller. A gyroscope can be used for measuring rotation of the cabin and changes in an angle of the whole vehicle, for example. Magnetic field sensor can also be used for measuring rotation of the cabinet, and it may also provide information on the absolute horizontal/vertical reference direction, for example. The signals from sensor units 24, 25 are led wirelessly or with cables to the electronics unit. If the signal is analog it may be amplified and converted into digital form in the A/D converter 284. However, if the sensor unit includes a sensor controller it may have a digital interface for the electronics unit 28. The digital signals are read by the processor 282.

The signals from the second sensor unit are used for compensating the signal from the first sensor unit in order to achieve a more accurate weighing result of the load. The compensation may thus take into account the angle of a boom and a carrying means of the material transfer vehicle. When measuring the position and movement of booms and carrying means, it is possible to determine the position and movement of the carrying means and booms in relation to the horizontal plane / vertical direction and in relation to the first, weighing sensor or related structures. This information is then used for the compensation of the weighing measurement in order to achieve a compensated weighing result. It is also possible to use the data received from sensor units 24, 25 for the compensation of the weighing measurement. These sensors may provide data for compensation which relates to possible acceleration and angle of the material transfer vehicle as a whole, as well as rotation of the cabinet.

The compensated weighing result is stored to a memory 283 of the electronics unit, and shown at the display 281 of the electronics unit. The display may be a touch screen, for example, with also a possibility to input information and selections by the user. The memory and the touch screen are controlled by the processor 282. The weighing of the load may be performed during the load is lifted, for example. The user may indicate that the measurement result is saved by pressing a corresponding push button switch, for example, whereby the arrangement is adapted to register the detected weight of the load. It is also possible that the registering of the measurement is activated when the position of the carrying means is within certain limits. The position of the carrying means can be detected with the second and possibly third sensors.

It is also possible that in addition to informing the user of the weighing result the system also gives an alarm to the user if the load weight exceeds a predetermined safety threshold value. The predetermined threshold value may be stored to the memory 283. The alarm may be audible or visible, for example. It is also possible that exceeding the safety threshold value of the load weight causes the measurement system to restrict further movement of the carrying means, a boom or the whole vehicle. It is also possible that exceeding the safety threshold value of the load weight causes the measurement system to force the carrying means to be moved to ground level, for example. Such a restriction or forcing of movement is meant to reduce the risk of damages due to e.g. overload.

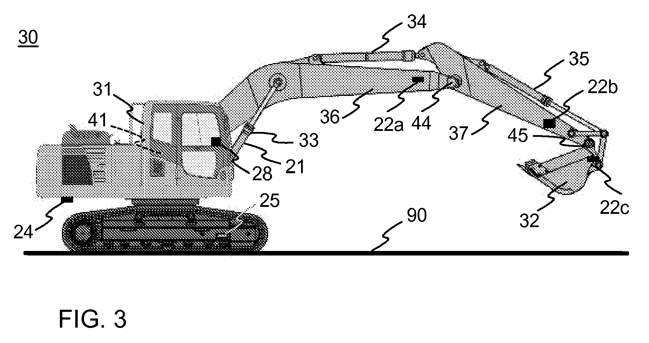

Figure 3 illustrates an excavator 30 with an exemplary measurement system according to the invention. The excavator has two articulated booms 36 and 37, which are moved by hydraulic cylinders 33 and 34 respectively. A bucket 32 is coupled to the boom 37, and moved with a hydraulic cylinder 35. The first sensor unit (not shown) includes a weighing sensor. The weighing sensor may be a pressure sensor located in one of the hydraulic cylinders 33, 34 and/or 35, preferably in the hydraulic cylinder 33. A weighing sensor may also/alternatively be a strain gauge transducer which is located at a joint 41 between chassis and boom 36, and/or at a joint 44 between booms 36 and 37, and/or at a joint 45 between the boom 37 and the carrying means 32. The weighing sensors are used for providing initial information on the load weight. There may be one or several sensor units including a weighing sensor at any of above mentioned locations or other suitable locations on the structure of the vehicle.

The measurement system has sensor units 22a, 22b and 22c of another type. Sensor unit 22a is located at the first boom 36, which is connected to the chassis/cabin at one end and to a second boom 37 at the other end. The sensor unit 22a is located at the end of the boom 37, near to the joint with the second boom 37. In this location the sensor gives accurate information on the angle of the boom 36. Sensor unit 22b is located at the second boom 37, which is connected to the first boom 36 at one end and to the bucket 32 at the other end. The sensor unit 22b is located near to the end of the boom 37, near to the joint with the bucket 32. In this location the sensor gives accurate information on the angle of the boom 37 in relation to the boom 36 and chassis 31. Sensor 22c is located at the bucket 32 for measuring the angle and/or the movement of the bucket. The sensor 22c may also be located at other parts connected to the bucket such as a shaft between the hydraulic cylinder and the bucket. In such a location the sensor unit is not so easily damaged in excavating. On the other hand, the angle/position of the bucket can be detected by the sensor unit even if it is installed to such a shaft, for example. These sensors preferably include gyroscope sensors, and they are used for compensation in measuring and calculating the load weight on the bucket 32. The second sensor unit may also have an accelerator and a magnetic field sensor, which may provide information on a reference horizontal/vertical direction. An accelerometer may also give information on the movements of the vehicle. The sensor unit may further include a sensor controller which receives signals from the sensors of the sensor unit and provides data for the electronics unit where the signals of the sensors are combined into digital angle/position/movement data.

The measurement system of Figure 3 has also two sensor units 24, 25 of third type. One of these sensor units 24 may be installed to the cabin of the vehicle, and one of the sensor units 25 may be installed to the chassis of the vehicle. Separate sensors for chassis and cabin may be preferable if chassis and cabin move in relation to each other, such as with an excavator. These sensors give information on the movement of the whole excavator as well as the rotating movement of the cabin. These sensors can also be used for compensation in measuring the load weight of the bucket 32.

The third sensor unit preferably has an accelerometer, which can provide information on the absolute horizontal/vertical reference direction as well as movement/acceleration of the whole vehicle. The third sensor unit 24, 25 may also be similar to the second sensor unit 22a, 22b, 22c, and it may include an accelerometer, a gyroscope sensor, a magnetic field sensor and a sensor controller. A gyroscope can be used for measuring rotation of the cabin and changes in the angle of the whole vehicle, for example. Magnetic field sensor can also be used for measuring rotation of the cabinet, and it may also provide information on the absolute horizontal/vertical reference direction, for example.

The electronics unit 28, including the user interface of the measurement system, is located inside the cabin 31 at an ergonomically suitable location.

The scope of the patent will be defined by the appended claims. Skilled persons will appreciate the fact that various changes and modifications may be made to the explicitly disclosed embodiments and features thereof without diverging from the scope as set forth in the claims.

For example, the carrying means is not necessarily a bucket of an excavator, but it may also be a platform or a tank of a truck or a hook of a crane, for example. The second sensor unit with a gyroscope can thus be installed to a platform of a truck in order to measure the angle and movement of the platform which can be lifted. It is also possible that the parts of the measurement system are arranged into units in a different way. For example, it is possible that each sensor is equipped with an integrated amplifier and A/D-converter in order to reduce effects of electric noise coupled to cables. It is also possible to use wireless data transfer between the sensors and the electronics unit, for example.

It should also be noted that even if the use of several sensor units of second type are illustrated in examples, it is also possible that smaller number of such sensors are used for weight compensation. For example, it may be sufficient to use sensor(s) located close to the carrying means for the compensation, especially if weighing sensor is also located close to the carrying means. It is also possible that a weighing sensor and an angle/acceleration sensor are located in a same sensor unit. For example, a passenger hoist may include a sensor unit installed between a boom and a platform, where the sensor unit may include a weighing sensor for weighing the load, and a gyroscope and/or accelerometer for measuring angle/acceleration for weighing compensation.

## Claims

1. A measurement system (20) for a material transfer vehicle, wherein the material transfer vehicle has means (32) for carrying material, and optionally a boom (36, 37) for holding the carrying means, and the measurement system comprises:
- at least one first sensor unit (21) for weighing the material being carried by the carrying means;
- at least one second sensor unit (22a, 22b, 22c) for measuring the angular position of the boom and/or the carrying means;
- processing means (282) for providing a weight measurement result of the material on the basis of the information received at least from the first sensor unit and the second sensor unit,
- user interface (281) for providing information on the weight measurement result, **characterized in that**
- the second sensor unit is installed at the boom and/or the carrying means of the material transfer vehicle for measuring the angular position of the boom and/or the carrying means,
- the second sensor unit comprises a gyroscope (222) measuring in three orthogonal directions for measuring said angular position and providing 3-dimensional measurement data, and
- the second sensor unit also comprises a three-dimensionally measuring accelerometer (224) for measuring movement, position, acceleration, and/or measuring reference direction of the sensor in relation to the vertical direction.

2. Measurement system according to claim 1, **characterized in that** the second sensor unit also comprises a three-dimensionally measuring magnetic field sensor (226) for measuring the direction of the sensor in relation to the magnetic field of the earth.

3. Measurement system according to any of claims 1-2, **characterized in** the output of the accelerometer (224) or a magnetic field sensor (226) of the second sensor unit (22a, 22b, 22c) is arranged to provide a reference angular position, and the gyroscope sensor (222) is arranged to provide a relative angular position, whereby angular position measurement result is based on the reference angular position and the relative angular position.

4. Measurement system according to any previous claim, **characterized in that** the system comprises at least one third sensor unit (24, 25) for measuring movement, position, angle and/or acceleration of the cabin and/or chassis of the vehicle.

5. Measurement system according to any previous claim, **characterized in that** the third sensor unit comprises a three-dimensionally measuring accelerometer for measuring movement and/or acceleration of the cabin/chassis of the vehicle.

6. Measurement system according to any previous claim, **characterized in that** the third sensor unit comprises a gyroscope measuring in three orthogonal directions for measuring angular position and or rotation of the cabin/chassis of the vehicle and providing 3-dimensional measurement data.

7. Measurement system according to any previous claim, **characterized in that** the third sensor unit comprises a 3-dimensionally measuring magnetic field sensor for measuring the magnetic field of the earth for providing a reference direction for measuring the angular position of the cabin/chassis of the vehicle, and/or measuring rotation of the cabin.

8. Measurement system according to any previous claim, **characterized in that** the first sensor unit comprises a strain gauge transducer or a pressure transducer.

9. Measurement system according to any previous claim, **characterized in that** the measurement system has data storage (283) for storing measurement data and/or measurement parameters, and/or alarm information for later access.

10. Measurement system according to any previous claim, **characterized in that** the system comprises a sensor unit which includes a first sensor unit and a second sensor unit, whereby the first and second sensor units form a single sensor unit.

## Patentansprüche

1. Messsystem (20) für einen Beschicker, wobei der Beschicker Mittel (32) zum Fördern von Material und fakultativ einen Ausleger (36, 37) zum Halten der Fördermittel aufweist und wobei das Messsystem umfasst:
- mindestens eine erste Sensoreinheit (21) zum Wiegen des von den Fördermitteln geförderten Materials;
- mindestens eine zweite Sensoreinheit (22a, 22b, 22c) zum Messen der Winkelposition des Auslegers und/oder der Fördermittel;
- Verarbeitungsmittel (282) zum Bereitstellen eines Wiegeergebnisses des Materials auf der Grundlage der von der mindestens ersten Sensoreinheit und der mindestens zweiten Sensoreinheit empfangenen Daten,
- eine Benutzerschnittstelle (281) zum Bereitstellen von Daten über das Wägeergebnis, **dadurch gekennzeichnet, dass**
- die zweite Sensoreinheit am Ausleger und/oder den Fördermitteln des Beschickers zum Messen der Winkelposition des Auslegers und/oder der Fördermittel installiert ist,
- die zweite Sensoreinheit einen Kreiselkompass (222) zum Messen der drei orthogonalen Richtungen für die Messung der Winkelposition und das Bereitstellen dreidimensionaler Messdaten umfasst und
- die zweite Sensoreinheit außerdem einen dreidimensionalen Beschleunigungsmesssensor (224) zum Messen von Bewegung, Position, Beschleunigung und/oder Messbezugsrichtung des Sensors in Bezug zur vertikalen Richtung umfasst.

2. Messsystem nach Anspruch 1, **dadurch gekennzeichnet, dass** die zweite Sensoreinheit außerdem einen dreidimensionalen Magnetfeldmesssensor (226) zum Messen der Richtung des Sensors in Bezug auf das Magnetfeld der Erde umfasst.

3. Messsystem nach einem der Ansprüche 1-2, **dadurch gekennzeichnet, dass** die Ausgabe des Beschleunigungssensors (224) oder eines Magnetfeldsensors (226) der zweiten Sensoreinheit (22a, 22b, 22c) zum Bereitstellen einer Bezugswinkelposition angeordnet ist und dass der Kreiselkompasssensor (222) zum Bereitstellen einer relativen Winkelposition angeordnet ist, wobei das Ergebnis der Winkelpositionsmessung auf der Bezugswinkelposition und der relativen Winkelposition basiert.

4. Messsystem nach einem der vorhergehenden Ansprüche, **dadurch gekennzeichnet, dass** das System mindestens eine dritte Sensoreinheit (24, 25) zum Messen von Bewegung, Position, Winkel und/oder Beschleunigung der Kabine und/oder des Fahrgestells des Fahrzeugs umfasst.

5. Messsystem nach einem der vorhergehenden Ansprüche, **dadurch gekennzeichnet, dass** die dritte Sensoreinheit einen dreidimensionalen Beschleunigungsmesssensor zum Messen von Bewegung und/oder Beschleunigung der Kabine/des Fahrgestells des Fahrzeugs umfasst.

6. Messsystem nach einem der vorhergehenden Ansprüche, **dadurch gekennzeichnet, dass** die dritte Sensoreinheit einen Kreiselkompass zum Messen der drei orthogonalen Richtungen für die Messung der Winkelposition und/oder der Rotation der Kabine/des Fahrgestells des Fahrzeugs und zum Bereitstellen dreidimensionaler Messdaten umfasst.

7. Messsystem nach einem der vorhergehenden Ansprüche, **dadurch gekennzeichnet, dass** die dritte Sensoreinheit einen dreidimensionalen Magnetfeldmesssensor zum Messen des Magnetfelds der Erde zum Bereitstellen einer Bezugsrichtung für die Messung der Winkelposition der Kabine/des Fahrgestells des Fahrzeugs und/oder für die Messung der Rotation der Kabine umfasst.

8. Messsystem nach einem der vorhergehenden Ansprüche, **dadurch gekennzeichnet, dass** die erste Sensoreinheit einen Kraftsensor mit Dehnmessstreifen oder einen Drucksensor umfasst.

9. Messsystem nach einem der vorhergehenden Ansprüche, **dadurch gekennzeichnet, dass** das Messsystem einen Datenspeicher (283) zum Speichern von Messdaten und/oder Messparametern und/oder Alarminformationen für den späteren Zugriff aufweist.

10. Messsystem nach einem der vorhergehenden Ansprüche, **dadurch gekennzeichnet, dass** das System eine Sensoreinheit umfasst, die eine erste Sensoreinheit und eine zweite Sensoreinheit einschließt, wobei die erste und die zweite Sensoreinheit eine einzige Sensoreinheit bilden.

## Revendications

1. Système de mesure (20) pour un véhicule de transfert de matériau, dans lequel le véhicule de transfert de matériau présente un moyen (32) pour transporter du matériau, et optionnellement une flèche (36, 37) pour tenir le moyen de transport, et le système de mesure comprend :
- au moins une première unité de capteur (21) pour peser le matériau en train d'être transporté par le moyen de transport ;
- au moins une deuxième unité de transport (22a, 22b, 22c) pour mesurer la position angulaire de la flèche et/ou du moyen de transport ;
- un moyen de traitement (282) pour fournir un résultat de pesée du matériau sur la base des informations reçues au moins de la première unité de capteur et de la deuxième unité de capteur,
- une interface utilisateur (281) pour fournir des informations sur le résultat de pesée, **caractérisé en ce que**
- la deuxième unité de capteur est installée sur la flèche et/ou le moyen de transport du véhicule de transfert de matériau pour mesurer la position angulaire de la flèche et/ou du moyen de transport,
- la deuxième unité de capteur comprend un gyroscope (222) mesurant dans trois direction orthogonales pour mesurer ladite position angulaire et fournir des données de mesure tridimensionnelles, et
- la deuxième unité de capteur comprend également un accéléromètre à mesure tridimensionnelle (224) pour mesurer le mouvement, la position, l'accélération et/ou mesurer la direction de référence du capteur par rapport à la direction verticale.

2. Système de mesure selon la revendication 1, **caractérisé en ce que** la deuxième unité de capteur comprend également un capteur de champ magnétique à mesure tridimensionnelle (226) pour mesurer la direction du capteur par rapport au champ magnétique de la terre.

3. Système de mesure selon la revendication 1 ou 2, **caractérisé en ce que** la sortie de l'accéléromètre (224) ou d'un capteur de champ magnétique (226) de la deuxième unité de capteur (22a, 22b, 22c) est agencée pour fournir une position angulaire de référence, et le capteur de gyroscope (222) est agencé pour fournir une position angulaire relative, ce par quoi le résultat de mesure de la position angulaire est basé sur la position angulaire de référence et la position angulaire relative.

4. Système de mesure selon l'une quelconque revendication précédente, **caractérisé en ce que** le système comprend au moins une troisième unité de capteur (24, 25) pour mesurer le mouvement, la position, l'angle, et/ou l'accélération de la cabine et/ou du châssis du véhicule.

5. Système de mesure selon l'une quelconque revendication précédente, **caractérisé en ce que** la troisième unité de capteur comprend un accéléromètre à mesure tridimensionnelle pour mesurer le mouvement et/ou l'accélération de la cabine/du châssis du véhicule.

6. Système de mesure selon l'une quelconque revendication précédente, **caractérisé en ce que** la troisième unité de capteur comprend un gyroscope mesurant dans trois direction orthogonales pour mesurer la position angulaire et/ou la rotation de la cabine/du châssis du véhicule et fournir des données de mesure tridimensionnelles.

7. Système de mesure selon l'une quelconque revendication précédente, **caractérisé en ce que** la troisième unité de capteur comprend un capteur de champ magnétique à mesure tridimensionnelle pour mesurer le champ magnétique de la terre pour fournir une direction de référence pour mesurer la position angulaire de la cabine/du châssis du véhicule, et/ou mesurer la rotation de la cabine.

8. Système de mesure selon l'une quelconque revendication précédente, **caractérisé en ce que** la première unité de capteur comprend un transducteur à tensiomètre ou un transducteur de pression.

9. Système de mesure selon l'une quelconque revendication précédente, **caractérisé en ce que** le système de mesure présente un stockage de données (283) pour stocker des données de mesure et/ou des paramètres de mesure, et/ou des informations d'alarme pour un accès ultérieur.

10. Système de mesure selon l'une quelconque revendication précédente, **caractérisé en ce que** le système comprend une unité de capteur qui comprend une première unité de capteur et une deuxième unité de capteur, ce par quoi les première et deuxième unités de capteur forment une seule unité de capteur.
